(19) Europäisches Patentamt
European Patent Office
Office européen des brevets

(11) **EP 2 045 488 B1**

(12) **EUROPEAN PATENT SPECIFICATION**

(45) Date of publication and mention
of the grant of the patent:
**29.09.2010 Bulletin 2010/39**

(51) Int Cl.:
***F16J 9/20*** *(2006.01)*

(21) Application number: **08007925.4**

(22) Date of filing: **24.04.2008**

(54) **Piston ring of reciprocating engine**

Kolbenring eines Kolbenmotors

Segment de piston de moteur réciproque

(84) Designated Contracting States:
**CH DE DK LI**

(30) Priority: **05.10.2007 JP 2007261572**

(43) Date of publication of application:
**08.04.2009 Bulletin 2009/15**

(73) Proprietor: **Mitsubishi Heavy Industries, Ltd.
Tokyo 108-8215 (JP)**

(72) Inventors:
• **Makino, Takero
Nagasaki, Nagasaki-ken (JP)**
• **Yoshihara, Sadao
Kobe 650-0045 (JP)**
• **Watanabe, Kei
Hyogo-ku, Kobe
Hyogo-ken (JP)**
• **Hosokawa, Naofumi
Hyogo-ku, Kobe
Hyogo-ken (JP)**

(74) Representative: **HOFFMANN EITLE
Patent- und Rechtsanwälte
Arabellastrasse 4
81925 München (DE)**

(56) References cited:
**DE-A1- 3 940 301      GB-A- 2 117 086
JP-A- 8 296 740      JP-A- 2002 039 384
US-A- 4 359 230      US-A- 5 779 243**

**Description**

**BACKGROUND OF THE INVENTION**

**Field of the Invention**

The present invention relates to a piston ring for reciprocating engines, in particular for diesel engines, the piston ring having a barrel-shaped outer circumferential surface, i.e. the outer circumferential surface of axial cross section of the piston ring is shaped into a curved surface of curvature radius of R.

**Description of the Related Art**

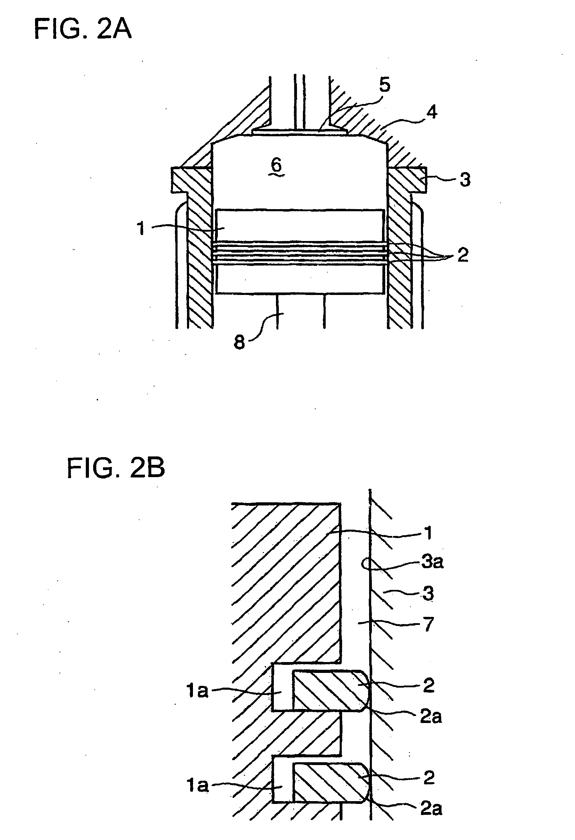

In FIG.2A is shown schematically a cross sectional view of construction surrounding a combustion chamber of a large diesel engine and in FIG.2B a partial cross section of piston rings inserted into ring grooves of a piston. Referring to FIG.2A, a piston 1 connected to a piston rod 8 reciprocates in a cylinder liner 3. The cylinder liner 3 is covered by a cylinder head 4 to form a combustion chamber 6 above the piston 1. The piston 1 is equipped with piston rings 2 as gas seal elements. An exhaust valve 5 is provided in the cylinder head to face the combustion chamber 6. FIG.2 shows a case of a crosshead type diesel engine, and the piston rod 8 is connected to a crosshead which is connected via a crosshead pin to a connecting rod which is connected to a crankshaft. The crosshead, crosshead pin, connecting rod, and crankshaft are not shown in the drawing. The crosshead is reciprocated by rotation of the crankshaft, and the piston 1 reciprocates as the crankshaft rotates. In the case of a trunk-piston engine, the connecting rod is directly connected to the piston 1 via a piston pin.

Referring to FIG.2B, piston rings 2, 2 are inserted into ring grooves 1a, 1a of a piston 1. The outer circumferential surface 2a of the piston ring 2a slides along the sliding surface 3a of the cylinder liner 3 when the piston 1 reciprocates in the cylinder liner 3. The gas pressure in the combustion chamber 6 exerts on the upper piston ring(top ring) of the piston rings 2 through a clearance 7 between the inner surface 3a of the cylinder liner 3 and the outer circumferential surface of the upper part of the piston 1 (piston top land) extending from upper piston ring groove of the piston ring grooves 1a.

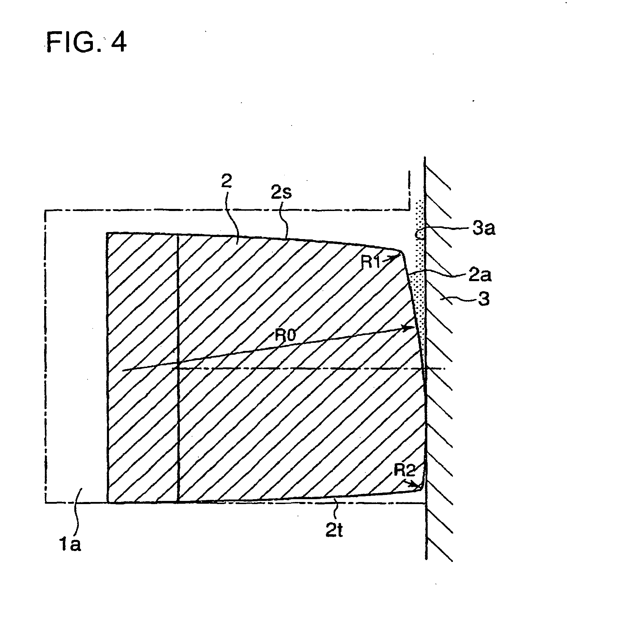

In FIG.4 is shown an enlarged cross section of a piston ring of a large diesel engine. The outer circumferential surface 2a of the piston ring 2 is shaped to be a curved surface of curvature radius of R0 in axial section. This curved surface is hereafter referred to as the first curved surface. The first curved surface of curvature radius of R0 of the piston ring 2 continues smoothly to the upper surface 2s thereof with an upper corner radius R1 and to the lower surface 2t thereof with a lower corner radius R2.

In a large diesel engine, generally the curvature radius R0 of circular arc of the first curved surface 2a has been determined to be about the inner diameter D of the cylinder liner 3 from a point of view of improving running-in performance and to prevent the upper corner radius R1 or lower corner radius R2 from contacting the inner surface 3a of the cylinder liner 3 when the piston ring 2 tilts due to tilting of the piston and other causes near the top dead center or bottom dead center.

In Japanese Laid-Open Patent Application No.2002-39384 is disclosed a piston ring of which the outer circumferential surface is shaped such that the curvature radius R0 continues smoothly to the corner radius R1 and R2 and the radiuses R1 and R2 are larger than 0.05 mm and smaller than the curvature radius R0, thereby preventing occurrence of cracks on the surface treated layer or peel-off of the surface treated layer formed on the round corners R1 and R2.

The curvature radius R0 of the piston ring of a large diesel engine is generally determined to be equal or smaller than the inner diameter D of cylinder liner, for example to be about 0.9D~1D so that the surface of the corner radius R1 or R2 near the continuing part thereof to the first curved surface of curvature radius of R0 does not contact the inner surface 3a of the cylinder liner 3 when the piston ring tilts due to tilting of the piston, torsion of the piston ring in the ring groove, etc.

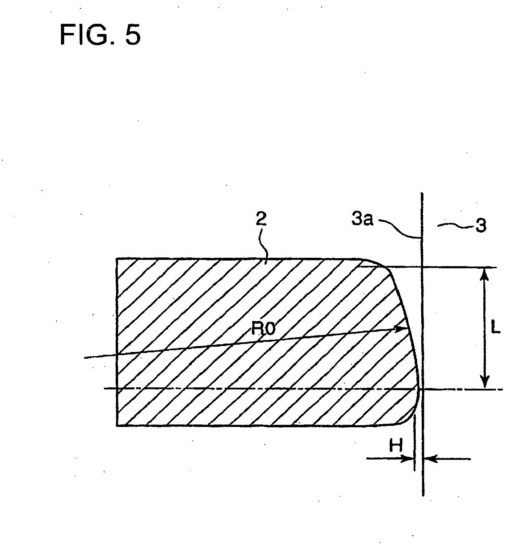

FIG.5 is a drawing for explaining gas seal performance of the piston ring 2. In the drawing, L is gas seal length, H is an oil film retaining equivalent clearance between the circumferential surface of the piston ring 2 and the inner surface 3a of the cylinder liner 3, and R0 is the curvature radius of the first curved surface of the piston ring 2. The oil film retaining equivalent clearance H is inversely proportional to the curvature radius R0. The gas leak flow Q through the clearance H is presented by the following equation (1).

$$Q \approx H^3 \cdot \Delta P / (12 \cdot \mu \cdot L) = \Delta P \cdot L^2 / (2592 \cdot \mu \cdot R0^3) \quad \cdot \cdot \cdot (1)$$

where, $\mu$ : friction coefficient between the outer circumferential surface of the piston ring 2 and inner surface 3a of the liner 3, $\Delta P$: pressure difference between upper surface and lower surface of the piston ring 2. The smaller the value of Q is, the higher the gas seal performance of the piston ring.

According to the equation (1), the gas leak Q is inversely proportional to the curvature radius R0 of the first curved surface of the piston ring 2. Therefore, by increasing R0, the value of Q of the above equation can be decreased, that is, gas seal performance of the piston ring can be increased. With a relative smaller value of R0 as R0=0.9D~1D as is in the prior art, the gas seal performance between the outer circumferential surface of the piston ring 2a and inner surface 3a of the cylinder liner 3 is relatively small, so blow-by gas increases due to insufficient gas seal performance, piston ring pack and ring groves are smeared, and sulfate corrosion on the sliding surfaces of the piston rings and cylinder liner increases due to sulfurous acid gas contained in the blow-by gas.

Further, as contact pressure (Hertzian stress) between the outer circumferential surface of the piston ring and the inner surface of the cylinder liner is inversely proportional to the square root of R0, the contact pressure increases with decreased radius R0. Therefore, it is preferable to increase the curvature radius R0 of the first curved surface of the piston ring also in a viewpoint of contact pressure of the piston ring to the cylinder liner.

JP 08/296740 discloses a piston ring for a diesel engine with which it is possible to secure a satisfactory thickness of an oil film by forming the center of a sliding face of the piston ring in a barrel shape.

US 5,779,243 discloses a split piston ring, in which the radius of curvature is much smaller than the outside ring diameter.

US 4,359,230 discloses a piston ring which is provided with an outer peripheral surface provided with a rotary finish machined curved center portion, a rotary finished machined chamfer edges and a final finish plated wear-resistant coating.

## SUMMARY OF THE INVENTION

The present invention was made in light of problems of the prior art mentioned above, and the object of the invention is to provide a piston ring improved in gas sealing performance by increasing to the utmost extent the curvature radius R of the first curved surface of the outer circumferential surface of the piston ring, thereby preventing increase of blow-by gas flow due to insufficient gas sealing performance between the outer circumferential surface and the inner surface of the cylinder liner, preventing smearing of the region around piston rings due to increased leakage of combustion gas, suppressing occurrence of sulfate corrosion of the inner surface of the cylinder liner due to sulfurous acid contained in the blow-by gas, and reducing contact pressure between the sliding surface of the piston ring and the inner surface of the cylinder liner, and to provide a reciprocating internal combustion engine such as a diesel engine equipped with the piston ring at least as the top ring.

To attain the object, the present invention proposes a piston ring according to amended claim 1.

By determining the curvature radius R to be 1.18D, gas leak flow Q calculated by equation (1) decreases to a half of that when the curvature radius R is 0.95D which is conventionally adopted. The maximum value of R=1.35D is determined to be 1.35D in order to evade occurrence of contact of the upper corner radiuses R1 or lower corner radius R2 do not contact directly the inner surface 3a of the cylinder liner 3 when the piston ring 2 tilts most heavily near the top dead center or bottom dead center of the piston stroke. When the curvature radius R is too large, the corner radius R1 or R2 contacts the inner surface of the cylinder liner with too small tilting angle of the piston ring.

Validity of determining the curvature radius R to be 1.18-1.35 was proved by experiment on engines of cylinder bore D of 330 mm and larger.

By increasing the curvature radius R of the first curved surface of the piston ring profile to 1.18D-1.35D as compared with 0.95D of conventional piston ring, combustion gas leak flow Q through the oil film retaining equivalent clearance H between the piston ring outer surface and the inner surface of the cylinder decreases inversely proportionally to the third power of R as is recognized from equation (1), and the gas leak flow Q decreases to about 1/3 with the piston ring of R=1.35 as compared with that of a conventional piston ring of R0=0.95D.

By the improvement in gas sealing performance in the sliding surface, blow-by gas flow is decreased, decrease in engine performance is prevented, smearing of the region around piston rings is prevented, and occurrence of sulfate corrosion of the inner surface of the cylinder liner due to sulfurous acid contained in the blow-by gas can be suppressed.

As mentioned above, larger curvature radius R of the first curved surface of the piston ring is desirable from a viewpoint of gas sealing performance as combustion gas flow resistance through the sliding surface of the piston ring on the inner surface of the cylinder is proportional to the third power of R. By determining the curvature radius R to be 1.18~1.35 times the cylinder bore D, said gas flow resistance is increased to 2-3 times that of a conventional piston ring of curvature radius R0 of 0,95D.

Lower limit of R is determined to be 1.18D in order to obtain increase in the combustion gas flow resistance at least by 2 times.

Tilting of the piston ring increases due to tilting of the piston, thermal deformation of the piston, etc. and the tilting is heaviest in the top ring located nearest to the combustion chamber. When the curvature radius R is determined to be too large, there occurs a possibility that the edge of the piston ring outer circumferential surface, i.e. the corner radius R1 or R2 contacts the inner surface of the cylinder liner and injures the inner surface of the cylinder liner. The upper limit of the curvature radius R is determined to be 1.35D in order to evade said contact of the corner radius R1 or R2 to the inner surface of the cylinder liner.

It is preferable that a flame spray coating of molybdenum or the like which is superior in initial break-in property, anti-wear property, and anti-scuff property, is applied on the outer circumferential surface of the piston ring.

Decrease in surface roughness of the inner surface of the cylinder liner is promoted by the abrasive action of hard molybdenum particles in the running-in period and oil retaining property of machined cast iron surface of the cylinder liner is increased.

Further, it is preferable that among a plurality of piston rings equipped to a piston of the engine a piston ring to be located nearest to a combustion chamber of the engine is such that the center of the curvature radius R of the circular arc of the outer circumferential surface thereof is at a point apart from the center line of the height of the piston ring in the direction contrary to the combustion chamber, and each of other piston rings is such that the center of the curvature radius R of the circular arc of the outer circumferential surface thereof is on the center line of the height of the piston ring or such that the center of the curvature radius R of the circular arc of the outer circumferential surface thereof is at a point apart from the center line of the height of the piston ring in the direction contrary to the combustion chamber.

By forming the outer circumferential surface of the top ring located nearest to the combustion chamber and exposed to severest thermal environment into the profile mentioned above, its gas sealing performance which is of principal importance for combustion gas sealing in the engine can be secured.

**BRIEF DESCRIPTION OF THE DRAWINGS**

FIG.1 is an enlarged cross section of an embodiment of a piston ring of a large diesel engine according to the invention.
FIG.2A is a schematic cross sectional view of construction surrounding a combustion chamber of a large diesel engine.
FIG.2B is a partial cross section of piston rings inserted into ring grooves of a piston together with the piston and inner surface of the cylinder liner.
FIG.3 are bar graphs showing decrease of piston ring contact pressure and increase of blow-by gas flow resistance through the sliding surface by increasing the curvature radius of the first curved surface of the piston ring.
FIG.4 is an enlarged cross section of a conventional piston ring of a large diesel engine.
FIG.5 is a drawing for explaining gas seal performance of a piston ring.

**DETAILED DESCRIPTION OF THE PREFERRED EMBODIMENTS**

A preferred embodiment of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

FIG. 2A is a schematic cross sectional view of construction surrounding a combustion chamber of a large diesel engine, and

FIG. 2B is a partial cross section of piston rings inserted into ring grooves of a piston together with the piston and inner surface of the cylinder liner.

Referring to FIG.2A, a piston 1 connected to a piston rod 8 reciprocates in a cylinder liner 3. The cylinder liner 3 is covered by a cylinder head 4 to form a combustion - chamber 6 above the piston 1. The piston 1 is equipped with piston rings 2 as gas seal elements. An exhaust valve 5 is provided in the cylinder head to face the combustion chamber 6. FIG.2 shows a case of a crosshead type diesel engine, and the piston rod 8 is connected to a crosshead which is connected via a crosshead pin to a connecting rod which is connected to a crankshaft. The crosshead, crosshead pin, connecting rod, and crankshaft are not shown in the drawing. The crosshead is reciprocated by rotation of the crankshaft, and the piston 1 reciprocates as the crankshaft rotates. In the case of a trunk-piston engine, the connecting rod is directly connected to the piston 1 via a piston pin.

Referring to FIG.2B, piston rings 2 are inserted into ring grooves 1a of a piston 1. The outer circumferential surface 2a of the piston rings 2 slides along the sliding surface 3a of the cylinder liner 3 when the piston 1 reciprocates in the cylinder liner 3. The gas pressure in the combustion chamber 6 exerts on the upper piston ring (top ring) of the piston rings 2 through a clearance 7 between the inner surface 3a of the cylinder liner 3 and the outer circumferential surface of the upper part of the piston 1(piston top land) extending from upper piston ring groove of the piston ring grooves 1a.

The present invention relates to an improvement in shape of the piston ring 2 of a large diesel engine.

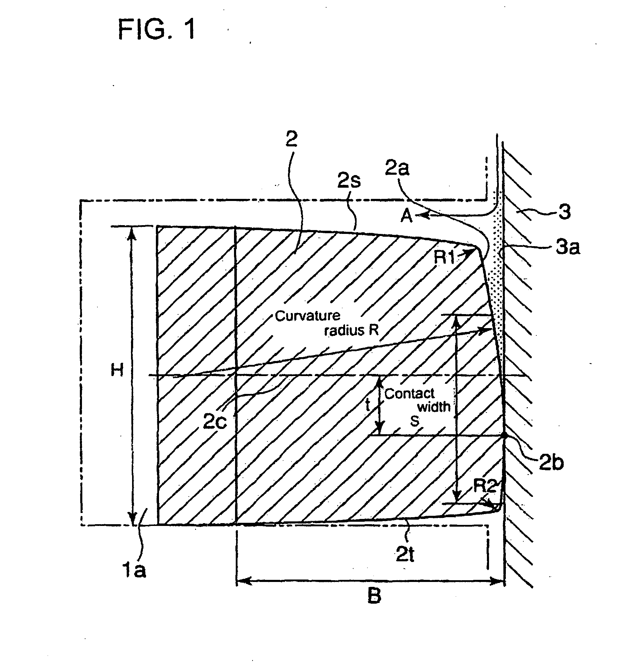

Referring to FIG.1 showing the piston ring 2 of the invention in an enlarged cross section, the piston ring 2 inserted in a ring groove 1a reciprocates in a cylinder liner 3 with its outer circumferential surface 2a contacting the inner surface 3a of the cylinder liner 3. Symbol S represents contact width and 2b a contact point.

Combustion gas intruded into the ring groove 1a through the piston top land clearance 7(see FIG.2B) as shown by an arrow A is sealed by the contact of the lower surface 2t of the piston ring 2 to the lower surface of the ring groove 1a except a part of the gas leaking out through the closed gap of the piston ring 2.

The outer circumferential surface of the piston ring 2 is formed of a first curved surface of curvature radius R (hereafter referred to as first curved surface R), an upper corner radius R1 connecting smoothly the first curved surface R to the upper surface 2s, and a lower corner radius R2 connecting smoothly the first curved surface R to the lower surface 2t. In FIG.1, H is the height of the piston ring 2, B is the width of the piston ring 2, and 2c is the center line of the height H.

The curvature radius R of the circular arc of the first curved surface of the outer circumferential surface 2a is determined to be R=1.18D-1.35D, where D is the inner diameter of the cylinder 3.

For example, in a case of a large diesel engine of cylinder bore of D=850 mm, the outer circumferential surface profile of the piston ring 2 is determined to be: R=1150 mm, and R1=R2=1.25 mm.

The range of curvature radius R that R=1.18D~1.35D is determined on the basis of the following consideration:

The minimum value of R=1.18D is determined so that the gas leak flow Q calculated by equation (1) decreases to about half of that when R=0.95D which is a value adopted conventionally.

The maximum value of R=1.35D is determined so that the upper corner radiuses R1 or lower corner radius R2 do not contact directly the inner surface 3a of the cylinder liner 3 when the piston ring 2 tilts most heavily near the top dead center or bottom dead center of the piston stroke. When the curvature radius R is too large, the corner radius R1 or R2 contacts the inner surface of the cylinder liner with too small tilting angle of the piston ring.

Therefore, with a piston ring with the curvature radius R larger than the maximum value of 1.35D, it may happen that the upper corner radius R1 or lower corner radius R2 contacts directly to the inner surface 3a of the cylinder liner 3.

As mentioned above, larger curvature radius R of the first curved surface of the piston ring 2 is desirable from a viewpoint of gas sealing performance as combustion gas flow resistance through the sliding surface of the piston ring on the inner surface of the cylinder is proportional to the third power of R. By determining the curvature radius R to be 1.18~1.35 times the cylinder bore D, said gas flow resistance is increased to 2-3 times that of a conventional piston ring of curvature radius R0 of 0, 95D.

Lower limit of R is determined to be 1.18D in order to obtain increase in the combustion gas flow resistance at least by 2 times.

Tilting of the piston ring increases due to tilting of the piston, thermal deformation of the piston, etc. and the tilting is heaviest in the top ring located nearest to the combustion chamber. When the curvature radius R is determined to be too large, there occurs a possibility that the edge of the piston ring outer circumferential surface, i.e. the corner radius R1 or R2 contacts the inner surface of the cylinder liner and injures the inner surface of the cylinder liner. The upper limit of the curvature radius R is determined to be 1.35D in order to evade said contact of the corner radius R1 or R2 to the inner surface of the cylinder liner.

Validity of determining the curvature radius R to be 1.18~1.35 was proved by experiment on engines of cylinder bore D of 330 mm or larger.

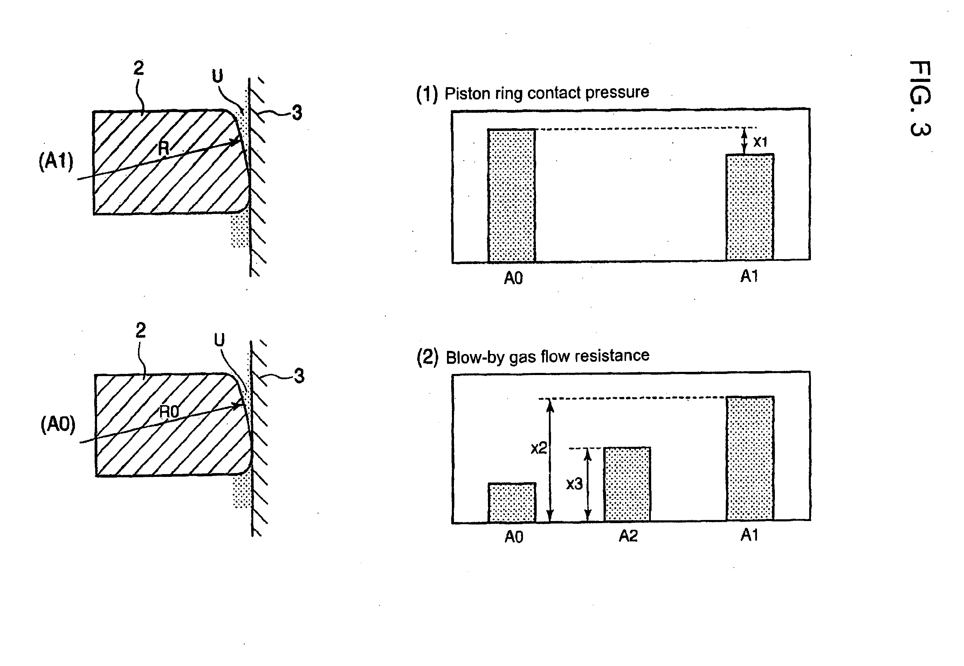

In FIG.3, piston ring profile of which the curvature radius R is 1. 35D is shown in (A1), and that of conventional piston ring of which the curvature radius R0 is 0.95D is shown in (A0).
Lubrication oil around the sliding surface is indicate by a letter U.

Contact pressure between the outer circumferential surface of the piston ring 2 and the inner surface of the cylinder liner 3 is compared in the bar graph(1) in FIG. 3. Contact pressure(Hertzian stress) x1 of the piston ring of R=1.35D shown in (A1) is smaller by X1=17% as compared with that of the piston ring of R0=0.95D shown in (A0).

Blow-by gas flow resistance is compared in the bar graph (2) in FIG.3. Blow-by gas flow resistance x2 of the piston ring of R=1.35D shown in (A1) is about 3 times larger than that of the piston ring of R0=0.95D shown in (A0). In the bar graph (2) is also shown blow-by gas flow resistance x3 of a piston ring of R=1.18D. The gas flow resistance x3 is about 2 times that of the piston ring of R0=0.95D.

By increasing the curvature radius R of the first curved surface of the piston ring profile to 1.18D~1.35D as compared with 0.95D of conventional piston ring, combustion gas leak flow Q through the oil film retaining equivalent clearance H between the piston ring outer surface and the inner surface of the cylinder decreases inversely proportionally to the third power of R as is recognized from equation (1), and the gas leak flow Q decreases to about 1/3 with the piston ring of R=1.35 as compared with that of a conventional piston ring of R0=0.95D.

By the improvement in gas sealing performance in the sliding surface, blow-by gas flow is decreased, decrease in engine performance is prevented, smearing of the region around piston rings is prevented, and occurrence of sulfate corrosion of the inner surface 3a of the cylinder liner 3 due to sulfurous acid contained in the blow-by gas can be suppressed.

Further, it is preferable that a flame spray coating of molybdenum or the like which is superior in initial break-in property, anti-wear property, and anti-scuff property, is applied on the sliding surface 2a of the piston ring 2. Decrease in surface roughness of the inner surface 3a of the cylinder liner 3 is promoted by the abrasive action of hard molybdenum particles in the running-in period and oil retaining property of machined cast iron surface 3a of the cylinder liner 3 is increased.

It is preferable that the first curved surface of the top ring located nearest to the combustion chamber is formed to be a circular arc of curvature radius R of 1.18D~1.35D with the center of curvature radius R being positioned at a point below the center line 2c of the piston ring height toward the lower surface 2t of the piston ring, and that the first curved surface of other piston ring or rings is formed to be a circular arc of curvature radius R of 1.18D~1.35D with the center of curvature radius R being positioned at a point on the center line 2c of the piston ring height or with the center of curvature radius R being positioned at a point below the center line 2c of the piston ring height toward the lower surface 2t of the piston ring.

By forming the outer circumferential surface of the top ring located nearest to the combustion chamber and exposed to severest thermal environment into the profile mentioned above, its gas sealing performance can be secured.

The second and other piston rings may be formed to have a first curved surface of which the center of the curvature radius is on the center line 2c.

According to the invention, a piston ring improved in gas sealing performance by increasing to the utmost extent the curvature radius R of the first curved surface of the outer circumferential surface of the piston ring, is provided. With the piston ring, blow-by gas flow through the sliding surface between the outer circumferential surface of the piston ring and the inner surface of the cylinder liner is decreased, smearing of the region around piston rings due to leakage of combustion gas is prevented, occurrence of sulfate corrosion of the inner surface of the cylinder liner due to sulfurous acid contained in the blow-by gas can be suppressed, and contact pressure between the sliding surface of the piston ring and the inner surface of the cylinder liner is reduced. By adopting the piston ring according to the invention at least as the top ring, a reciprocating internal combustion engine, particularly a diesel engine improved in output performance and durability will be provided.

**Claims**

1. A piston ring (2) suitable for a piston (1) of a reciprocating engine with a cylinder liner (3) having an inner diameter (D), wherein the outer circumferential surface (2b) of the piston ring (2) has a curved surface of a circular arc of a curvature radius (R) in its axial section, **characterized in that** the curvature radius (R) is 1.18-1.35 times the inner diameter (D) of the cylinder liner (3) in which the piston ring (2) slides in use.

2. The piston ring according to claim 1, wherein a flame spray coating of molybdenum or the like which is superior in initial break-in property, anti-wear property, and anti-scuff property, is applied on the outer circumferential surface (2b) of the piston ring (2).

3. A piston having a plurality of piston rings at least one of which is formed according to claim 1 or 2, wherein the piston ring (2) to be located nearest to a combustion chamber of the engine is such that the center of the curvature radius R of the circular arc of the outer circumferential surface (2b) thereof is at a point apart from the center line (2c) of the height of the piston ring (2) in the direction contrary to the combustion chamber (6), and each of other piston rings (2) is such that the center of the curvature radius R of the circular arc of the outer circumferential surface (2b) thereof is on the center line (2c) of the height of the piston ring (2) or such that the center of the curvature radius R of the circular arc of the outer circumferential surface (2b) thereof is at a point apart from the center line of the height of the piston ring (2) in the direction contrary to the combustion chamber (6).

**Patentansprüche**

1. Kolbenring (2), der für einen Kolben (1) für eine Hubmaschine mit einer Zylinderbuchse (3), die einen Innendurchmesser (D) aufweist, geeignet ist, wobei die Außenumfangsoberfläche (2b) des Kolbenrings (2) eine gekrümmte Oberfläche eines Kreisbogens mit einem Krümmungsradius (R) in seinem axialen Bereich aufweist, **dadurch gekennzeichnet, dass** der Krümmungsradius (R) das 1,18 ~ 1,35-Fache des Innendurchmessers (D) der Zylinderbuchse (3) beträgt, in welcher der Kolbenring (2) während der Verwendung gleitet.

2. Kolbenring nach Anspruch 1, bei dem eine Flammenspritzbeschichtung aus Molybdän oder dergleichen, was hinsichtlich einer initialen Einlaufeigenschaft, Antiverschleißeigenschaft und Antiabnutzungseigenschaft ausgezeichnet ist, auf die Außenumfangsoberfläche (2b) des Kolbenrings (2) aufgebracht ist.

3. Kolben, der eine Mehrzahl von Kolbenringen aufweist, wobei wenigstens einer nach Anspruch 1 oder 2 ausgebildet ist, bei dem der Kolbenring (2), der am nächsten an der Verbrennungskammer der Maschine anzuordnen ist, so vorgesehen ist, dass das Zentrum des Krümmungsradius R des Kreisbogens der Außenumfangsoberfläche (2b) davon sich an einem Punkt weg von der Zentrumslinie (2c) der Höhe des Kolbenrings (2) in der Richtung von der Verbrennungskammer (6) weg befindet, und jeder der Kolbenringe (2) so vorgesehen ist, dass das Zentrum des Krümmungsradius R des Kreisbogens der Außenumfangsoberfläche (2b) davon sich auf der Zentrumslinie (2c) der Höhe des Kolbenrings (2) befindet, oder so, dass das Zentrum des Krümmungsradius R des Kreisbogens der Außenumfangsoberfläche (2b) davon sich an einem Punkt weg von der Zentrumslinie der Höhe des Kolbenrings (2) in der Richtung von der Verbrennungskammer (6) weg befindet.

**Revendications**

1. Segment de piston (2) approprié pour un piston (1) d'un moteur alternatif avec une chemise de cylindre (3) ayant un diamètre intérieur (D), dans lequel la surface circonférentielle extérieure (2b) du segment de piston (2) a une surface courbée d'un arc circulaire d'un rayon de courbure (R) dans sa section axiale, **caractérisé en ce que** le rayon de courbure (R) fait 1,18-1,35 fois le diamètre intérieur (D) de la chemise de cylindre (3) dans laquelle le segment de piston (2) coulisse en fonctionnement.

2. Segment de piston selon la revendication 1, dans lequel un revêtement au pistolet à flamme de molybdène ou analogue, qui est supérieur en termes de propriété de rodage initial, de propriété anti-usure et de propriété anti-éraflure, est appliqué sur la surface circonférentielle extérieure (2b) du segment de piston (2).

3. Piston ayant une pluralité de segments de piston dont au moins un est formé selon la revendication 1 ou 2, dans lequel le segment de piston (2) à placer au plus près d'une chambre de combustion du moteur est tel que le centre du rayon de courbure R de l'arc circulaire de la surface circonférentielle extérieure (2b) de celui-ci est à un point écarté de la ligne centrale (2c) de la hauteur du segment de piston (2) dans la direction contraire à la chambre de combustion (6), et chacun des autres segments de piston (2) est tel que le centre du rayon de courbure R de l'arc circulaire de la surface circonférentielle extérieure (2b) de celui-ci est sur la ligne centrale (2c) de la hauteur du segment de piston (2) ou tel que le centre du rayon de courbure R de l'arc circulaire de la surface circonférentielle extérieure (2b) de celui-ci est à un point écarté de la ligne centrale de la hauteur du segment de piston (2) dans la direction contraire à la chambre de combustion (6).

FIG. 1

FIG. 2A

FIG. 2B

# FIG. 3

(1) Piston ring contact pressure

X1
A1
A0

(2) Blow-by gas flow resistance

A1
A2
x3
x2
A0

3
U
2
R
(A1)

3
U
2
R0
(A0)

FIG. 4

FIG. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002039384 A
- JP 8296740 A
- US 5779243 A
- US 4359230 A